# EUROPEAN PATENT APPLICATION

(11) **EP 3 121 474 A1**
(43) Date of publication of application: **25.01.2017**
(21) Application number: 15764810.6
(22) Date of filing: 19.03.2015
(51) Int. Cl.: F16D 13/75, F16D 13/69, F16D 25/12, F16D 28/00

(54) **CLUTCH DEVICE**

(30) Priority: 20.03.2014 JP 2014059154
(71) Applicant: Aisin Seiki Kabushiki Kaisha, Kariya-shi Aichi 448-8650 (JP)
(72) Inventor: YAMASAKI, Shoichi, Kariya-shi Aichi 448-8650 (JP); SHIOZAKI, Taro, Kariya-shi Aichi 448-8650 (JP); YAMADA, Hiroyuki, Kariya-shi Aichi 448-8650 (JP)
(74) Representative: Kramer Barske Schmidtchen Patentanwälte PartG mbB
(86) International application number: PCT/JP2015/058388
(87) International publication number: WO 2015/141813

(57) **Abstract**

A clutch device of the present embodiment includes, for example, a first elastic member which urges a second member toward a first position via a third member, a second elastic member which urges the second member toward a second position, a third member which changes an axial position of the second member, and a variable setter located between the second member and the third member and capable of changing the axial length.

## Description

### TECHNICAL FIELD

Embodiments of the present invention relate to a clutch device.

### BACKGROUND ART

Conventionally, a clutch device has been known which includes a means for compensating changes in characteristics caused by wear of a friction material(for example, Patent Literatures 1 and 2).
Patent Literature 1: Japanese Patent Application Laid-open No. 2002-357231
Patent Literature 2: Japanese Patent Application Laid-open No. 2004-60772

### DISCLOSURE OF INVENTION

### PROBLEM TO BE SOLVED BY THE INVENTION

It is meaningful to attain such a clutch device with a novel structure capable of compensating the deviations from desired characteristics caused by wear and other reasons, for example.

### MEANS FOR SOLVING PROBLEM

A clutch device according to an embodiment includes, for example, a first member rotatably provided around a rotational center, a second member provided to be rotatable around the rotational center and movable in an axial direction of the rotational center between a first position and a second position, the first position in which a torque is transmitted by friction between the second member and the first member, the second position to which no torque is transmitted from the first position, a third member movably provided in the axial direction to change an axial position of the second member, a first elastic member that urges the second member toward the first position via the third member, a second elastic member that urges the second member toward the second position, and a variable setter located between the second member and the third member and capable of changing a length of the variable setter in the axial direction. The clutch device of the embodiment can thus adjust the amount of elastic deformation of an elastic member according to an axial position of a second member or a third member, for example, by adjusting the axial length of a variable setter. Thus, the clutch device can attain desired characteristics easily.

In the clutch device, for example, a magnitude of a force of the second elastic member changes in accordance with a change in the axial length of the variable setter, the force generated by the second elastic member corresponding to the axial position of the third member. Thus, for example, by changing (adjusting) the axial length of the variable setter, the pressing force to the one toward an opposite side of the other is thus changed (adjusted).

The clutch device includes, for example, an actuator that generates a force to move the third member in the axial direction, a detector that detects a physical quantity corresponding to the force generated by the actuator, and a control unit that controls the variable setter on the basis of a comparison between a physical quantity and a threshold value, the physical quantity detected by the detector while the third member is located within a predetermined range. Thus, for example, the operation force (load and output) of the actuator can be thus reduced more accurately.

In the clutch device, for example, the detector detects the physical quantity while no rotation is input to the clutch device. Thus, for example, the detector can thus detect more precise detected values, less affected by disturbances such as centrifugal force or vibration.

In the clutch device, for example, the detector detects the physical quantity while the third member is at a specific position within the predetermined range. Thus, for example, the detector can thus more quickly obtain detected values.

In the clutch device, for example, the control unit controls the variable setter on the basis of a comparison between a maximum value of the physical quantity detected by the detector and the threshold value. Thus, for example, the maximum value of the operation force of the actuator can be more reliably reduced.

In the clutch device, for example, the variable setter includes a fourth member including sawteeth in a circumferential direction, and a fifth member including a meshing part with a meshing surface to mesh with the sawteeth while inclined, the sawteeth and the mesh part meshing with each other depending on an axial position of the third member, the fifth member being capable of variably setting the axial position of the second member by moving the meshing part away from the fourth member in the axial direction to release the meshing with the sawteeth and by moving the meshing part relative to the fourth member in the circumferential direction to mesh with the sawteeth at a different position. Thus, for example, by a relatively simple operation, the clutch device can thus adjust the amount of elastic deformation of the elastic member according to the axial position of the second member or the third member.

In the clutch device, for example, the meshing part is moved away from the sawteeth while the third member is located outside a movable range in use. Thus, for example, enables the adjustment without affecting the normal operation of the clutch.

In the clutch device, for example, the variable setter includes a fourth member interposed between the one and the first elastic member, and having a surface extending toward one axial side as extending toward one circumferential side of the rotational center, a fifth member interposed between the one or the first elastic member and the fourth member to be movable away from the fourth member in the axial direction, having an abutment which slides with the surface, the fifth member configured to move to one axial side with respect to the fourth member while moving to one circumferential side of the rotational center with respect to the fourth member, and a third elastic member that generates a force by which the fourth member and the fifth member relatively move in the circumferential direction, and in the clutch device, while the fourth member and the fifth member are in contact with each other, the fourth member and the fifth member are suppressed from sliding in the circumferential direction by a frictional force between the surface and the abutment. Thus, for example, by a relatively simple structure and operation, the clutch device can thus adjust the amount of elastic deformation of the elastic member according to the axial position of the second member or the third member.

The clutch device includes, for example, an actuator that generates a force to move the one in the axial direction, and in the clutch device, the fourth member and the fifth member are configured to be moved away from each other in the axial direction by the actuator. Thus, for example, the structure of the clutch device can be thus reduced in size and weight.

A clutch device according to an embodiment includes, for example, two rotation transmitting units, one of the two rotation transmitting units being capable of selectively transmitting rotation, and the clutch device includes, for each of the rotation transmitting units, a first member rotatably provided around a rotational center, a second member provided to be rotatable around the rotational center and movable in the axial direction of the rotational center at least between a first position and a second position, the first position in which a torque is transmitted by friction between the second member and the first member, the second position in which the second member is more spaced apart from the first member than the first position and to which no torque is transmitted, a first elastic member that generates a pressing force to one of the first member and the second member toward the other, the force changing in accordance with the axial position of the second member, a second elastic member that generates a pressing force to the one toward an opposite side of the other, the force changing in accordance with the axial position of the second member, a third member movably provided in the axial direction to change the axial position of the second member, and a variable setter located between the second member and the third member and capable of changing the axial length. The clutch device including the two rotation transmitting units of an embodiment can thus adjust the amount of elastic deformation of the elastic member according to the axial position of the second member or the third member, for example, by adjusting the axial length of the variable setter, and thus, it can obtain desired characteristics easily.

### BRIEF DESCRIPTION OF DRAWINGS

FIG. 1 is a schematic cross-sectional view illustrating one side of a center line of an exemplary clutch device of a first embodiment while a rotation transmitting unit is in a cut-off state;
FIG. 2 is a schematic cross-sectional view illustrating one side of the center line of the exemplary clutch device of the first embodiment while the rotation transmitting unit is in a boundary state between a half-clutch state and the cut-off state;
FIG. 3 is a schematic cross-sectional view illustrating one side of the center line of the exemplary clutch device of the first embodiment while the rotation transmitting unit is in a transmission state;
FIG. 4 is a schematic cross-sectional view illustrating one side of the center line of the exemplary clutch device of the first embodiment when a variable setter is about to be operated;
FIG. 5 is a graph illustrating a relation between an axial position of a second member and the force of each elastic member in the exemplary clutch device of the first embodiment;
FIG. 6 is a schematic diagram illustrating the variable setter of the exemplary clutch device of the first embodiment, in which a fourth member and a fifth member thereof are circumferentially extended;
FIG. 7 is a diagram illustrating a serration and a meshing part of the variable setter of the exemplary clutch device of the first embodiment before adjustment, when viewed from radially outside;
FIG. 8 is a diagram illustrating the serration and the meshing part of the variable setter of the exemplary clutch device of the first embodiment when viewed from radially outside, when the serration and the meshing part are axially separated from each other;
FIG. 9 is a diagram illustrating the serration and the mesh part of the variable setter of the exemplary clutch device of the first embodiment when viewed from radially outside, when the serration and the meshing part are brought into close proximity to each other in the axial direction (after adjustment);
FIG. 10 is a graph illustrating a relation between an axial position of the second member and force of each elastic member in the exemplary clutch device of the first embodiment before and after the adjustment;
FIG. 11 is a schematic block diagram of the exemplary clutch device of the first embodiment;
FIG. 12 is a flowchart of an example of an adjustment procedure of the clutch device of the first embodiment at the time of factory shipment;
FIG. 13 is a graph illustrating an example of a change in the characteristics of the clutch device of the first embodiment due to the adjustment at the time of factory shipment;
FIG. 14 is a flowchart of an example of an adjustment procedure of the clutch device of the first embodiment after used;
FIG. 15 is a graph illustrating an example of a change in characteristics of the clutch device of the first embodiment due to the adjustment after used;
FIG. 16 is a diagram illustrating the serration and the meshing part of the variable setter of an exemplary clutch device of a first modification before the adjustment, when viewed from radially outside;
FIG. 17 is a diagram illustrating the serration and the meshing part of the variable setter of the exemplary clutch device of the first modification in which the serration and the meshing part are separated from each other in the axial direction, when viewed from radially outside;
FIG. 18 is a schematic diagram illustrating the fourth member and the fifth member of the variable setter of an exemplary clutch device of a second modification when they are circumferentially extended;
FIG. 19 is a schematic cross-sectional view illustrating one side of a center line of an exemplary clutch device of a second embodiment while the rotation transmitting unit is in a cut-off state; and
FIG. 20 is a schematic cross-sectional view illustrating one side of a center line an exemplary clutch device of a third embodiment while the rotation transmitting unit is in a cut-off state.

### MODES FOR CARRYING OUT THE INVENTION

Hereinafter, exemplary embodiments and modifications of the present invention will be disclosed. Configurations of the embodiments and modifications given below, and the operations and results provided by the configurations are merely an example. The present invention can also be achieved by configurations other than the configurations disclosed in the following embodiments and modifications. Further, the present invention can attain at least one of the various effects obtained by the configurations.

Further, embodiments and modifications disclosed below include same or similar constituent elements. Hereinafter, the same or similar constituent elements are denoted by common reference numerals, and redundant description thereof will not be provided. In the following, unless otherwise specified, an axial direction refers to an axial direction of a rotational center Ax, a radial direction refers to a radial direction of the rotational center Ax, and a circumferential direction refers to a circumferential direction of the rotational center Ax. Further, for convenience, one axial side refers to a right side in each drawing, and the other axial side refers to a left side.

### First Embodiment

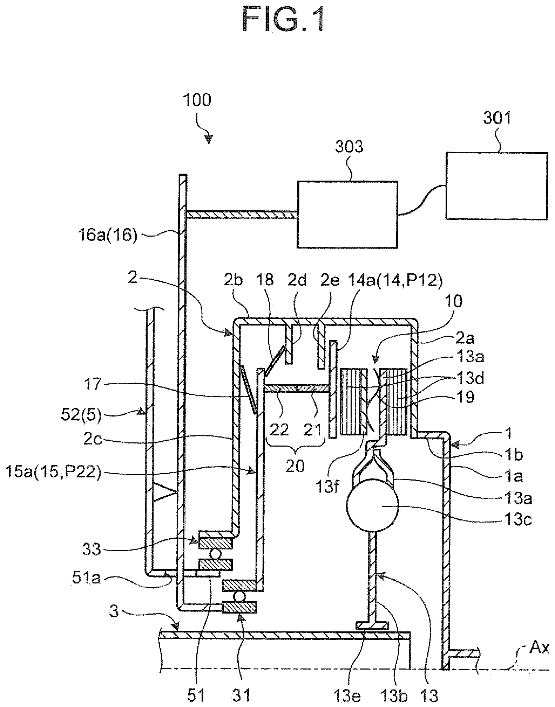

A clutch device 100 of the present embodiment (see FIG. 1) is located, for example, between an engine and a transmission. The clutch device 100 may also be provided not only between the engine and the transmission but at other positions, and may also be provided on various vehicles and machines having a rotating element.

In the present embodiment, the clutch device 100 is a so-called single-clutch including a single rotation transmitting unit 10. Controlled by an ECU 301, an actuator 303 axially moves movable parts such as a release plate 15, a lever 16, and a bearing 31 to thereby switchably place the clutch device 100 in a transmission state in which the rotation transmitting unit 10 transmits rotation and torque and a cut-off state in which the rotation transmitting unit 10 is interrupted from transmitting rotation. The rotation transmitting unit 10 is able to change the torque transmitted among a drive plate 1, a clutch cover 2 and a shaft 3. The drive plate 1 is one of an input member and an output member of the torque, and the shaft 3 is the other thereof. The rotation transmitting unit 10 is also able to transmit the rotation in a so-called half-clutch state in which the output torque decreases with respect to the input torque.

The clutch device 100 includes, as the components involving the rotation transmission and interruption by the rotation transmitting unit 10, the drive plate 1, the clutch cover 2, a clutch disk 13, a pressure plate 14, the release plate 15, the lever 16, the shaft 3 and the bearing 31. All of the drive plate 1, the clutch cover 2, the clutch disk 13, the pressure plate 14, the release plate 15, the lever 16, and the shaft 3 may be formed of a metal material.

The shaft 3 is rotatably supported by a case 5, for example, a transmission case, via a bearing (not illustrated). The shaft 3 rotates around a rotational center Ax. The shaft 3 has, for example, at least partial cylindrical shape.

The case 5 is provided with a protrusion 51. The protrusion 51 covers the shaft 3 from outside radially. The protrusion 51 has a cylindrical shape about the rotational center Ax and protrudes from a wall 52 of the case 5 toward one axial side (rightward in FIG. 1). The protrusion 51 may be formed integrally with another part(for example, the wall 52) of the case 5, or may be a separate member from another part and integrated with another part with a fastener, for example. The case 5 is an example of housing.

The drive plate 1 (a flywheel) is rotatably provided around the rotational center Ax. The drive plate 1 has an end wall 1a and a side wall 1b. The end wall 1a has a disc shape, and extend, intersecting with the rotational center Ax. The side wall 1b has a cylindrical shape, protruding toward the other axial side (leftward in FIG. 1) from the radial outer end of the end wall 1a. The drive plate 1 is supported by a drive source.

The clutch cover 2 is rotatably provided around the rotational center Ax. The clutch cover 2 has a first end wall 2a, a side wall 2b, a second end wall 2c, a flange 2d and a flange 2e. The first end wall 2a is connected to the end wall 1a of the drive plate 1. The first end wall 2a has an annular, plate-like shape and extends, intersecting with the rotational center Ax. The side wall 2b has a cylindrical shape about the rotational center Ax, protruding toward the other axial side (leftward in FIG. 1) from a position closer to the rotational center Ax than the end wall 1a of the first end wall 2a. The second end wall 2c is connected to the side wall 2b. The second end wall 2c has a disc shape and extends, intersecting with the rotational center Ax. Furthermore, one rotating part of a bearing 33, for example, a radial inner rotating part is connected to the protrusion 51, and the other rotating part, for example, a radial outer rotating part is connected to the radial inner end of the second end wall 2c. The second end wall 2c is rotatably supported around the rotational center Ax by the bearing 33.

The flange 2d is an inward flange, protruding radially inward from the side wall 2b between the second end wall 2c and the first end wall 2a. The flange 2d has an annular, plate-like shape and extends, intersecting with the rotational center Ax. The flange 2d has a substantially constant width in the radial direction, and circumferentially extends. Further, the flange 2e is located closer to the first end wall 2a than the flange 2d, that is, in the vicinity of the first end wall 2a. Multiple (for example, three) flanges 2e are circumferentially disposed at intervals, protruding radially inward from the side wall 2b. The flange 2e has a rectangular, plate-like shape or a tongue shape, intersecting with the rotational center Ax.

The clutch disk 13 is provided on the other axial side (the left side in FIG. 1) of the first end wall 2a. The clutch disk 13 includes an outer plate 13a, an inner plate 13b, a counter plate 13f, an elastic member 13c, a friction material 13d, and a spline coupler 13e (a hub). The outer plate 13a has a disc shape and extends, intersecting with the rotational center Ax. The inner plate 13b has a disc shape and extends, intersecting with the rotational center Ax. Specifically, one of the outer plate 13a and the inner plate 13b, for example, the inner plate 13b is axially interposed between the two plates (two sheets) of the other, for example, the outer plate 13a. Further, the outer plate 13a and the inner plate 13b can rotate together in a twisted state with an angular difference within at least part of the rotation range. The elastic member 13c, for example, a coil spring is interposed between the outer plate 13a and the inner plate 13b to be elastically contractible substantially in the circumferential direction. The elastic member 13c circumferentially expands and contracts in accordance with the relative rotation angle between the outer plate 13a and the inner plate 13b. The elastic member 13c accumulates torque as a compression force by elastic contraction, and releases the compression force as torque by elastic expansion. That is, the clutch disk 13 can alleviate torque fluctuation by the elastic member 13c. The clutch disk 13 rotates integrally with the shaft 3. The clutch disk 13 is movable in the axial direction. Specifically, one of the outer plate 13a and the inner plate 13b, for example, the inner plate 13b is supported by the shaft 3 via a cylindrical spline coupler 13e. The other of the outer plate 13a and the inner plate 13b, for example, the outer plate 13a has an area which is located between the first end wall 2a and a wall 14a. The outer plate 13a, the inner plate 13b, and the counter plate 13f may also be referred to as walls.

Further, the counter plate 13f has an annular, plate-like shape and extends, intersecting with the rotational center Ax. The counter plate 13f is located between the outer plate 13a and one of the first end wall 2a and the wall 14a, for example, closer to the wall 14a. In other words, the counter plate 13f is located on one or the other axial side of the outer plate 13a, for example, on the left side. The counter plate 13f rotates integrally with the outer plate 13a. Further, an elastic member 19 is interposed between the outer plate 13a and the counter plate 13f. The elastic member 19 is thinner in the axial direction, and is formed as, for example, a diaphragm spring, a cone spring, a disc spring, or a leaf spring. The elastic member 19 is elastically deformed while the outer plate 13a and the counter plate 13f approach each other. The elastic member 19 elastically deforms to apply reaction force to or urges the outer plate 13a and the counter plate 13f. The elastic member 19 applies the force to the outer plate 13a and the counter plate 13f to move apart from each other. That is, the outer plate 13a is given the force to direct toward the opposite side to the counter plate 13f from the elastic member 19, and the counter plate 13f is given the force to direct toward the opposite side to the outer plate 13a from the elastic member 19. Friction materials 13d are interposed between one of the outer plate 13a and the counter plate 13f, for example, the outer plate 13a and the first end wall 2a, and between the other of the outer plate 13a and the counter plate 13f, for example, the counter plate 13f and the wall 14a, respectively. The friction materials 13d are coupled to the outer plate 13a and the counter plate 13f, for example, by bonding or with a connector. The elastic member 19 is an example of a second elastic member. In addition, the friction materials can also be provided on the first end wall 2a and the wall 14a.

The wall 14a of the pressure plate 14 has an annular, plate-like shape and extends, intersecting with the rotational center Ax. The pressure plate 14 is supported by the release plate 15 via a variable setter 20. The pressure plate 14 is movably provided in the axial direction. Further, the pressure plate 14 is configured to rotate integrally with the clutch cover 2.

A wall 15a of the release plate 15 is supported by the protrusion 51 via the bearing 31 so as to be rotatable around the rotational center Ax. One rotating part of the bearing 31 (for example, a radial outer rotating part) is supported by the protrusion 51 so as not to rotate relative to the protrusion 51 but be axially movable, and is connected to the radial inner end of the wall 15a. Meanwhile, the other rotating part of the bearing 31, for example, a radial inner rotating part is connected to the radial inner end of the wall 16a. That is, the release plate 15 is supported by the protrusion 51 via the bearing 31 so as to be axially movable and rotatable around the rotational center Ax. Further, the release plate 15 rotates integrally with the clutch cover 2 by circumferentially catching the clutch cover 2 or friction therewith.

An elastic member 17 is interposed between the second end wall 2c of the clutch cover 2 and the wall 15a of the release plate 15. The elastic member 17 is thinner in the axial direction and formed, for example, as a diaphragm spring, a cone spring, or a disc spring. The elastic member 17 is elastically deformed while the second end wall 2c and the wall 15a approach each other. The elastic member 17 elastically deforms to apply a reaction force to or bias the second end wall 2c and the wall 15a. The elastic member 17 applies the force to the second end wall 2c and the wall 15a to move away from each other. That is, the second end wall 2c is given the force from the elastic member 17 to direct toward the opposite side to the wall 15a, and the wall 15a is given the force from the elastic member 17 to direct toward the opposite side to the second end wall 2c. The elastic member 17 is an example of the first elastic member.

The elastic member 18 is interposed between the flange 2d of the clutch cover 2 and the wall 15a of the release plate 15. The elastic member 18 is thinner in the axial direction and formed, for example, as a diaphragm spring, a cone spring, or a disc spring. The elastic member 18 is elastically deformed while the flange 2d and the wall 15a approach each other. The elastic member 17 elastically deforms to apply a reaction force to the flange 2d and the wall 15a. The elastic member 17 applies the force to the flange 2d and the wall 15a to move away from each other, that is, urges the flange 2d and the wall 15a. That is, the flange 2d is given the force from the elastic member 17 to direct toward the opposite side to the wall 15a, and the wall 15a is given the force from the elastic member 17 to direct toward the opposite side to the flange 2d. The second end wall 2c and the flange 2d are located on the opposite sides of the wall 15a in the axial direction. The elastic member 17 and the elastic member 18 thus apply the forces to the wall 15a (the release plate 15) in the opposite directions.

The lever 16 is movably provided in the axial direction with respect to the case 5. The lever 16 has an extension 16a. The extension 16a extends in the radial direction, and has a plate-like and strip shape or a rod shape. The extension 16a is connected to the rotating part of the bearing 31 opposite the one supported by the protrusion 51, for example, a radial inner rotating part. An actuator (not illustrated) moves the lever 16 in the axial direction to thereby move the release plate 15 and the pressure plate 14 in the axial direction and switch the transmission state, the half-clutch state, and the cut-off state of the rotation transmitting unit 10.

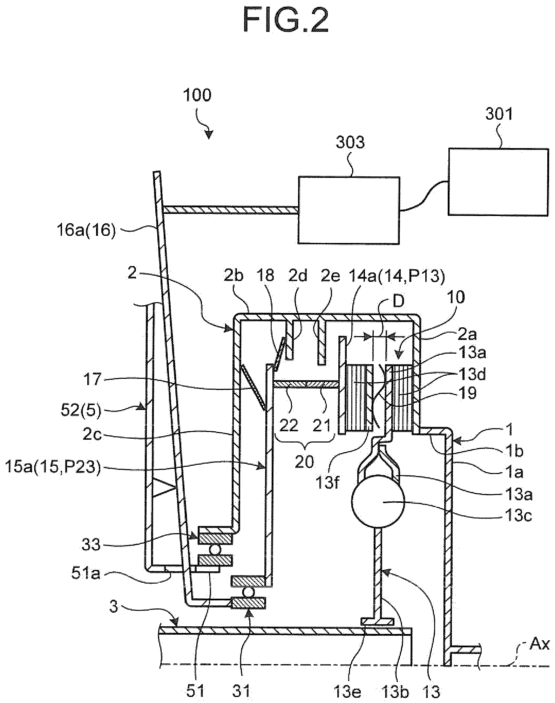

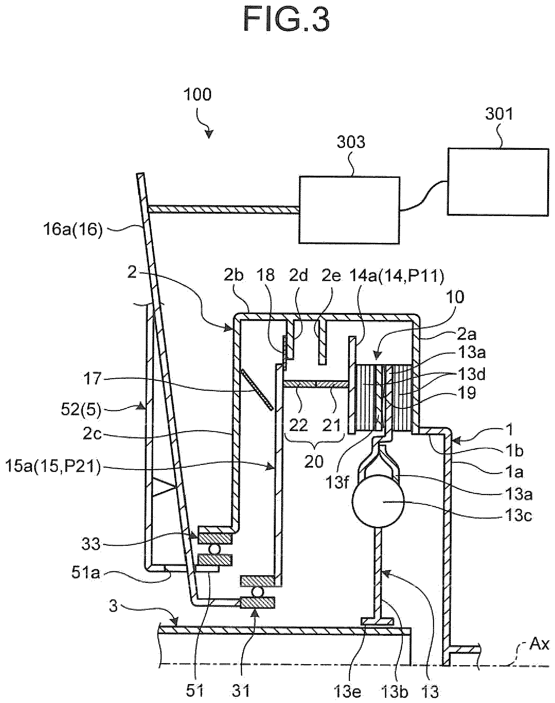

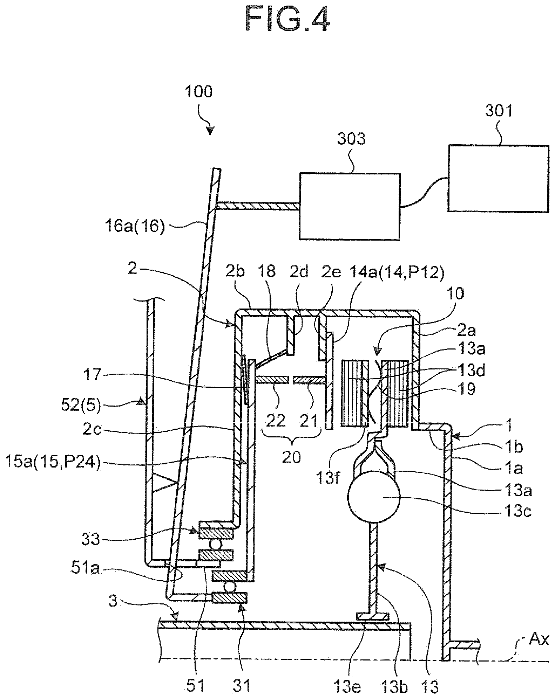

As illustrated in FIGS. 1 to 3, the pressure plate 14 can move in the axial direction, at least between a position P11 (FIG. 3) and a position P12 (FIG. 1). The pressure plate 14 may be thus located at a position P13 (FIG. 2) between the position P11 and the position P12. The variable setter 20 is interposed between the pressure plate 14 and the release plate 15. The variable setter 20 has two wedge rings 21 and 22. The base 21 is supported by the pressure plate 14, and the base 22 is supported by the release plate 15. The variable setter 20 can be placed in a contact state (a normal state, FIGS. 1 to 3) in which the two wedge rings 21 and 22 are in contact with each other, and in a separated state (a set state, FIG. 4) in which the two wedge rings 21 and 22 are separated from each other. In the contact state, the pressure plate 14 and the release plate 15 axially abut on each other and are integrated. In the separated state, the pressure plate 14 and the release plate 15 are axially spaced apart from each other. The positions P21 to P23 of the release plate 15 correspond to the positions P11 to P13 of the pressure plate 14. As illustrated in FIG. 4, the release plate 15 can also be moved to a position P24 opposite the position P21 instead of the position P22, along with the movement of the lever 16. The positions P21 to P23 represent a movable range of the release plate 15 during normal use of the clutch device 100. The position P24 is a position for adjustment outside the normal movable range. With the release plate 15 located at the position P24, the variable setter 20 is placed in the separated state (set state), the wedge rings 21 and 22 are separated from each other, and the pressure plate 14 and the release plate 15 are also separated from each other. The pressure plate 14 interferes (contacts) with the flange 2e and is prevented from axially moving to the other side beyond the position contacting the flange 2e, that is, to the left side in FIG. 4. The flange 2e functions as a stopper or inhibitor of the pressure plate 14. Further, the wedge rings 21 and 22 may also be referred to as base members and members.

While the pressure plate 14 is located between the position P13 and the position P11, that is, in the state shown in FIG. 2 and FIG. 3 and the state between FIGS. 2 and 3, the elastic member 19 is compressed in the axial direction by the outer plate 13a and the counter plate 13f. In this state, the pressure plate 14 receives the elastic, compressive reaction force caused by the compression of the outer plate 13a and the counter plate 13f from the elastic member 19, that is, a force to the other axial side in the present embodiment. In this state, the torque is transmitted among the clutch cover 2, the pressure plate 14 and the clutch disk 13 via the friction materials 13d. While the pressure plate 14 is located in the vicinity of the position P13, slippage occurs among the friction materials 13d, the clutch cover 2 and the pressure plate 14 (a half-clutch state of the rotation transmitting unit 10). While the pressure plate 14 is located at the position P11, the rotation transmitting unit 10 is placed in the transmission state. The clutch disk 13 is an example of a first member, the pressure plate 14 is an example of a second member, and the position P11 is an example of a first position. Further, the axial position of the pressure plate 14 changes together with the change in the axial position of the release plate 15. The release plate 15 is an example of a third member.

Meanwhile, while the pressure plate 14 is located between the position P13 and the position P12, that is, in the state shown in FIG. 1 and an intermediate state between the states shown in FIG. 1 and FIG. 2, the elastic member 19 causes the friction materials 13d to move away from both of the first end wall 2a and the wall 14a. In this state, the pressure plate 14 does not receive the elastic, compressive reaction force by the compression of the outer plate 13a and the counter plate 13f from the elastic member 19, that is, the force to the other axial side in the present embodiment. In this state, the rotation transmitting unit 10 is placed in a cut-off state. The position P12 is an example of a second position.

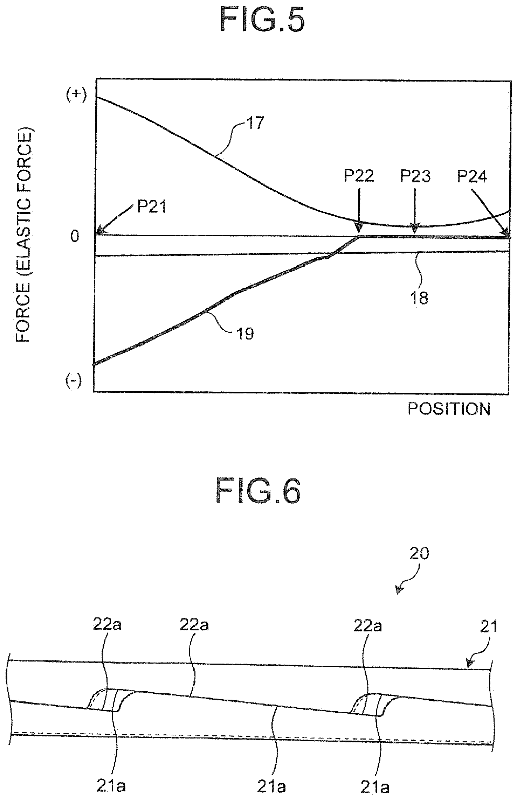

The force acting on the pressure plate 14 and the release plate 15 from the elastic members 17, 18 and 19 changes in accordance with the axial positions of the pressure plate 14 and the release plate 15. FIG. 5 illustrates an example of the magnitude of the elastic force of the elastic members 17, 18 and 19 acting on the positions of the release plate 15. Depending on the axial position of the release plate 15, the amount of axial compression of the elastic members 17, 18 and 19, and the axial, elastic, compressive reaction force change. A horizontal axis of FIG. 5 indicates positions of the release plate 15. An origin of the horizontal axis is the position illustrated in FIG. 3, that is, the position P21 of the release plate 15 while the outer plate 13a of the clutch disk 13 and the counter plate 13f are placed between the first end wall 2a and the wall 14a and the first end wall 2a and the wall 14a come closest to each other. In FIG. 5 one side of the vertical axis, positive (upper side) indicates the direction in which the wall 14a approaches the outer plate 13a or rightward in FIGS. 1 to 4, and the other side, negative (lower side) indicates the direction in which the wall 14a moves away from the outer plate 13a or leftward in FIGS. 1 to 4. Further, the characteristics shown in FIG. 5 do not change even with the horizontal axis indicating the position of the pressure plate 14, the position of the lever 16, or a stroke of the actuator 303.

The elastic member 17 applies the force to the release plate 15 and the wall 14a of the pressure plate 14 to move toward the outer plate 13a (the pressing force to the wall 14a toward the outer plate 13a). The magnitude (absolute value) of the force by the elastic member 17 becomes maximum when the release plate 15 is located at the position P21 (origin), and the magnitude gradually decreases along with the axial motion of the release plate 15 from the position P21 to the position P22.

The elastic member 18 applies the force to the release plate 15 to move away from the outer plate 13a, that is, the force opposite the pressing force to the wall 14a to move toward the outer plate 13a. The magnitude (absolute value) of the force of the elastic member 18 becomes maximum when the release plate 15 is located at the position P21 (origin), and the magnitude gradually decreases along with the axial motion of the release plate 15 from the position P21 to the position P22. However, the spring constant of the elastic member 18 is smaller than the spring constant of the elastic member 17, and the magnitude of the force applied to the release plate 15 by the elastic member 18 is smaller than the magnitude of force applied to the release plate 15 by the elastic member 17. The elastic member 18 applies reduced force to one axial side to act on the pressure plate 14 from the release plate 15.

The elastic member 19 also applies the force to the release plate 15 and the wall 14a of the pressure plate 14 to move away from the outer plate 13a, that is, opposite the pressing force to the wall 14a to move toward the outer plate 13a. The magnitude of force (absolute value) of the elastic member 18 becomes maximum when the release plate 15 is located at the position P21 (the origin of FIG. 3, the left end), and the magnitude gradually decreases as the release plate 15 moves to the one axial side from the position P21. Herein, in a low torque range at the time of the start of a vehicle, the elastic force of the elastic member 18 is greater than the elastic force of the elastic member 19, and in other subsequent torque ranges, the elastic force of the elastic member 18 is smaller than the elastic force of the elastic member 19. As described above, the elastic member 19 applies the force to the pressure plate 14 and the release plate 15 only when the pressure plate 14 is located between the position P11 and the position P13, that is, the release plate 15 is located between the position P21 and the position P23, in the states shown in FIG. 2 and FIG. 3, and the intermediate state between them. The elastic member 19 does not apply the force to the pressure plate 14 and the release plate 15 when the pressure plate 14 is located between the position P13 and the position P12, that is, the release plate 15 is located between the position P23 and the position P22.

The rotation transmitting unit 10 of the clutch device 100 is placed in a transmission state during non-operation of the lever 16 with the outer plate 13a placed between the first end wall 2a and the wall 14a by the force of the elastic member 17. In the clutch device 100, by the force to the lever 16, the release plate 15 and the pressure plate 14 are moved to the other axial side (left side in FIGS. 1 to 3) against the force of the elastic member 17, the state of the rotation transmitting unit 10 is switchable to the half-clutch state and the cut-off state. The elastic members 18 and 19 generate the force which diminishes the force from the elastic member 17. That is, the elastic members 18 and 19 contribute to reducing the operational force for operating the lever 16 in order to allow the rotation transmitting unit 10 of the clutch device 100 to transition from the transmission state to the half-clutch state or the cut-off state. That is, the elastic members 18 and 19 are an example of an assist spring. In the clutch device 100, each of the elastic members 17, 18 and 19 is set so that the rotation transmitting unit 10 transmits the torque without slippage while the pressure plate 14 is located at the position P11 and the release plate 15 is located at the position P21. Furthermore, the elastic members 17, 18 and 19 are set so that the force of the elastic member 17 is diminished by the force of the elastic members 18 and 19, to reduce to a relatively small force the operational force for the lever 16 to move the pressure plate 14 and the release plate 15. It can be understood from FIG. 5 that the two elastic members 18 and 19 generate the load reversely relative to the load generated by the elastic member 17. By the resultant force of the two elastic members 18 and 19 that can be relatively simply structured, the clutch device 100 attains such characteristics that the force of the elastic member 17 is diminished in a wider movable range of the release plate 15 and the lever 16.

However, in some cases the clutch device 100 may not attain the desired characteristics due to the differences or variation in individual components or aging degradation such as deterioration of the elastic members 17, 18 and 19 or wear of the friction materials 13d. In view of this, the clutch device 100 is equipped with the variable setter 20. The variable setter 20 includes the wedge rings 21 and 22 axially facing and abutting on each other. The base 21 is connected to the wall 14a (the pressure plate 14), and the base 22 is connected to the wall 15a (the release plate 15). The wedge rings 21 and 22 are located between the pressure plate 14 and the release plate 15 (the elastic member 17). The base 21 is interposed between the base 22 and the pressure plate 14, and the base 22 is interposed between the base 21 and the release plate 15 (the elastic member 17). The variable setter 20 can vary the axial distance between the wedge rings 21 and 22, that is, the axial length, the height and the thickness of the variable setter 20. Along with a change in the axial distance between the wedge rings 21 and 22, the axial distance between the wall 14a (the pressure plate 14, the second member) and the wall 15a (the release plate 15, the third member) changes. This makes it possible to change the axial distance of the space in which the elastic members 17, 18 and 19 and the friction materials 13d are placed, while the pressure plate 14, the release plate 15 and the lever 16 are located at their respective axial positions. This further results in changing the elastic force of the elastic members 17, 18 and 19 or the contact state between the friction materials 13d and the first end wall 2a and the wall 14a at the respective axial positions of the pressure plate 14, the release plate 15, and the lever 16. For example, in regard to the elastic member 19, an axial distance D (see FIG. 2) between the outer plate 13a and the counter plate 13f, which support the both axial ends of the elastic member 19 at a certain position of the release plate 15, is changed by the adjustment with the variable setter 20. The longer the length of the variable setter 20, the shorter the axial distance D between the outer plate 13a and the counter plate 13f supporting both axial ends of the elastic member 19 at the certain position of the release plate 15, that is, at the same position before and after the adjustment with the variable setter 20.

As illustrated in FIGS. 1 to 4, the wedge rings 21 and 22 overlap each other in the axial direction. Both the wedge rings 21 and 22 have a cylindrical shape around the rotational center Ax. The wedge rings 21 and 22 axially overlap the wall 14a, the friction materials 13d, the outer plate 13a, and the elastic member 19. Further, the wedge rings 21 and 22 are disposed relatively near the contact points between the elastic members 17 and 18 and the wall 15a. In the present embodiment, the base 21 is coupled to the wall 14a (the pressure plate 14), and the base 22 is coupled to the wall 15a (the release plate 15). The base 21 moves integrally with the pressure plate 14 in the axial direction, and the base 22 moves integrally with the pressure plate 14 in the axial direction.

As illustrated in FIG. 6, one (both in this embodiment) of the wedge rings 21 and 22 has surfaces 21a and 22a (inclined surfaces, spiral surfaces) which extend to one axial side (for example, an upper side) (in a vertical direction of FIG. 6) as they extend to one circumferential side (for example, a left side) (in a lateral direction of FIG. 6). The wedge rings 21 and 22 include a number of surfaces 21a and 22a, for example, at regular intervals. A step changing in axial position is provided between two adjacent surfaces 21a and 22a. Further, the other of the wedge rings 21 and 22 has surfaces 22a and 21a (abutments) that face and contact with the surfaces 21a and 22a. The surfaces 21a of the same shape provided circumferentially at regular intervals abut on the surfaces 22a of the same shape provided circumferentially at regular intervals, respectively. With the rotation of one of the wedge rings 21 and 22 around the rotational center Ax relative to the other, the surfaces 21a and 22a slide each other, thereby changing the axial distance between the wedge rings 21 and 22. The variable setter 20 variably sets the relative circumferential positions of the base 21 and the base 22, to variably set the axial distance between the wedge rings 21 and 22, and the axial length, height and thickness of the variable setter 20. The wedge rings 21 and 22 are configured to be able to move away from each other in the axial direction. The wedge rings 21 and 22 are brought into close contact with each other in the axial direction by the force generated by the elastic members 17, 18 and 19. The base 21 is an example of a fourth member, and the base 22 is an example of a fifth member.

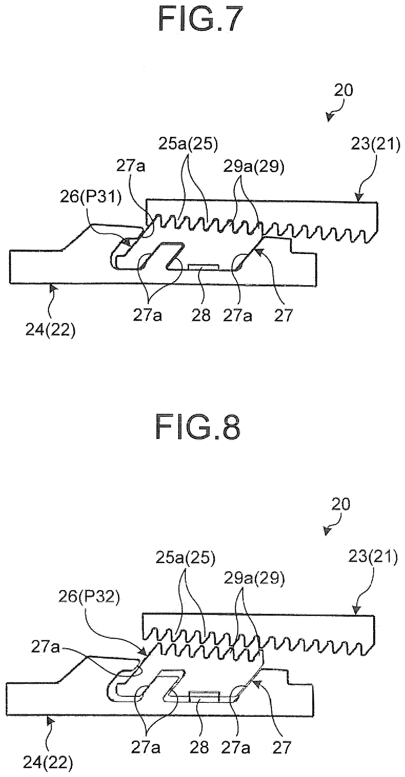

Further, as illustrated in FIG. 7, the variable setter 20 includes an adjuster 23 provided on the base 21, and an adjuster 24 provided on the base 22. In FIGS. 7 to 9 lateral direction corresponds to the circumferential direction and vertical direction corresponds to the axial direction. The adjuster 23 is coupled to the base 21 so as to be integrally movable at least in the circumferential direction. The adjuster 24 is coupled to the base 22 so as to be integrally movable at least in the circumferential direction. The adjuster 23 has a serration 25 which includes sawteeth 25a aligned circumferentially. The serration 25 extends circumferentially in substantially parallel to the surface 21a. The adjuster 24 has a meshing part 26, a support 27, and an elastic part 28. The meshing part 26 meshes with the sawteeth 25a (the serration 25). The meshing part 26 is supported by the support 27 so as to be movable in a direction intersecting with the axial direction and the circumferential direction, an oblique direction along a cylindrical surface between the axial direction and the circumferential direction, and a spiral direction (hereinafter, simply referred to as tilt direction). Specifically, the support 27 is provided with a guide 27a extending in the tilt direction, that is, a rail, a groove, and a wall. At least a part of the meshing part 26, that is, a housing, a convex, and a movable part are movably supported by the guide 27a. The elastic part 28 elastically generates a pressing force to the meshing part 26 to approach the sawteeth 25a. The elastic part 28 is, for example, a leaf spring. The meshing part 26 has a serration 29 which includes sawteeth 29a aligned in the circumferential direction. The serration 29 extends circumferentially in substantially parallel to the surface 22a. The sawteeth 25a (the serration 25) and the sawteeth 29a (the serration 29, the mesh part 26) mesh with each other.

In the variable setter 20, the circumferential positions of the wedge rings 21 and 22 are defined by the meshing between the sawteeth 25a and the sawteeth 29a.

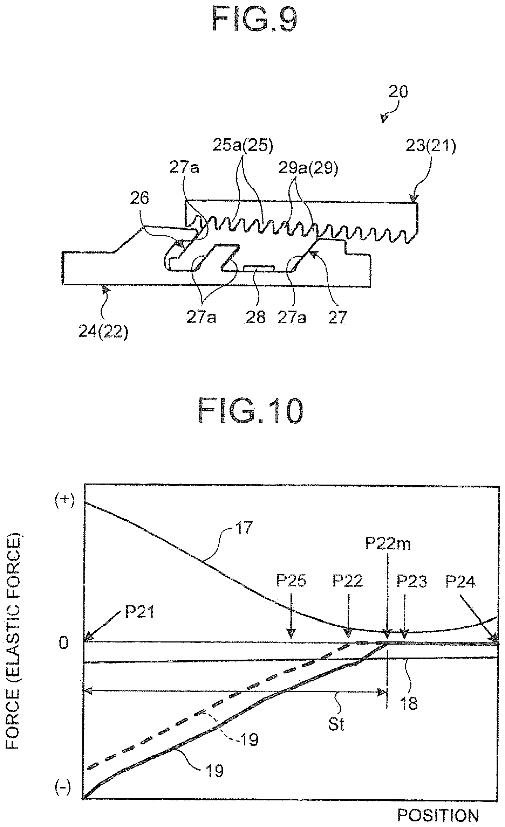

This defines the axial distance between the wedge rings 21 and 22, and the axial distance between the wall 14a (the pressure plate 14) and the wall 15a (the release plate 15). Here, along with the movement of the lever 16 and the release plate 15 to the positions illustrated in FIG. 4 controlled by an actuator (not illustrated), the wedge rings 21 and 22 are axially moved away from each other as illustrated in FIG. 8 to axially move the sawteeth 29a of the meshing part 26 away from the sawteeth 25a. That is, the meshing part 26 meshing with sawteeth 25a at the position P31 moves away from the sawteeth 25a therefrom to a position P32. The meshing part 26 is guided in the oblique direction by the guide 27a and is pressed toward the adjuster 24 by the force generated by the elastic part 28. The position P32 is thus located closer to one circumferential side than the position P31. The actuator moves the lever 16 and the release plate 15 from the positions of FIG. 8 to move the wedge rings 21 and 22 close to each other in the axial direction as illustrated in FIG. 9, disengaging the sawteeth 25a from the meshing sawteeth 29a in the state shown in FIG. 7 and circumferentially shifting and meshing with other sawteeth 29a, that is, another position of the serration 29. Along with this, guided by the guide 27a and the meshing part 26, the adjusters 23 and 24 are moved away from each other in the lateral direction of FIGS. 7 to 9, to slide the wedge rings 21 and 22 in the lateral direction in FIG. 6 or the circumferential direction. By the sliding between the surfaces 21a and 22a, the wedge rings 21 and 22 are axially moved away from each other. Thus, in the variable setter 20, the wedge rings 21 and 22 are separated from each other and then approach each other again in the axial direction, thereby increasing the axial distance between the wall 14a (the pressure plate 14) and the wall 15a (the release plate 15). The longer the axial distance between the wall 14a and the wall 15a, the larger the axial force by the elastic member 19, the repulsive force and the elastic force from the elastic deformation. For example, when the axial force of the elastic member 19 is smaller than an expected value, the variable setter 20 can increase the axial force to the expected value. Specifically, this is effective, for example, in the case of no obtainment of a desired force due to accumulated dimensional errors in the respective parts of the elastic member 19 in the original state when assembled, or due to the aged degradation of the elastic member 19. Further, wear-out of the friction materials 13d increases the distance between both axial ends of the elastic member 17 and decreases the force of the elastic member 17. Even in this case, it is possible to further increase the axial force of the elastic member 17. Further, the variable setter 20 may also cause the characteristics of other components at occurrence of events other than those illustrated herein to be closer to the desired characteristics.

By adjusting the variable setter 20, it is possible to change the characteristics of the elastic member 19 from the broken line (before the adjustment) to the solid line (after the adjustment) in FIG. 10. Representation in FIG. 10 is similar to that in FIG. 5. After the adjustment, the amount (length) of the pressed elastic member 19 by the wall 14a at each displaced position of the wall 15a increases from the one before the adjustment. That is, at each displaced position of the wall 15a the force generated by the elastic member 19 after the adjustment becomes greater than that before the adjustment. Further, the force of the elastic member 19 decreases as the lever 16 moves to separate the wall 15a from the wall 14a from the positions of FIG. 3, and it becomes zero in a substantially free state (the states shown in FIG. 2 and P22m in FIG. 10) when the elastic member 19 is no longer interposed between the wall 14a and the outer plate 13a. It is understood from FIG. 10 that the longer the axial distance between the wedge rings 21 and 22 by the adjustment of the variable setter 20, the larger the displacement amount St of the release plate 15 from the transmission state of the rotation transmitting unit 10 to the substantially free state of the elastic member 19, that is, the movable range (stroke) of the release plate 15 which allows the elastic member 19 to effectively function.

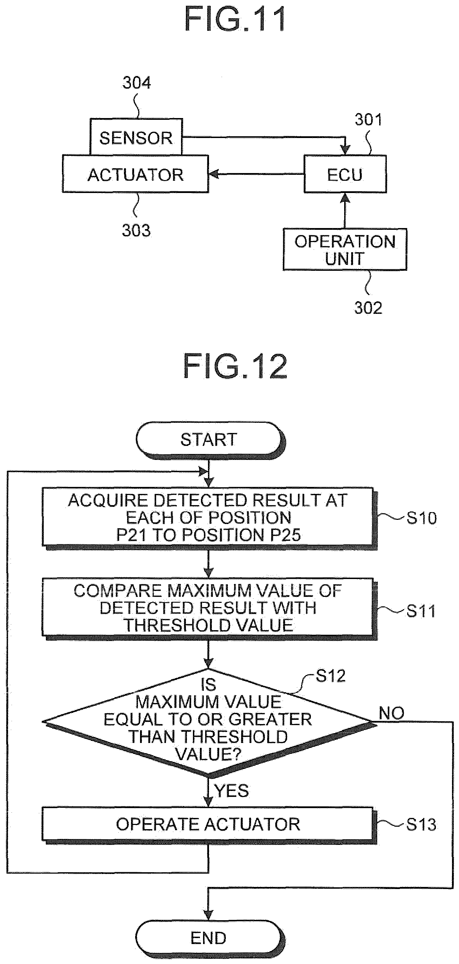

The characteristics may be changed from the broken line to the solid line in FIG. 10 based on a comparison between the physical quantity corresponding to the force of the actuator and a predetermined value (a threshold value). As illustrated in FIG. 11, the clutch device 100 includes an electronic control unit (ECU) 301, an operation unit 302, an actuator 303, and a sensor 304. The ECU 301 is an example of a control unit. The operation unit 302 is, for example, an ignition switch or an operation button. The actuator 303, for example, may include a drive source such a linear actuator or a motor, and a motion conversion mechanism (such as a deceleration mechanism, a link mechanism, and a direction conversion mechanism). The sensor 304 is a sensor that detects a load of the actuator 303, for example, a current sensor that detects a current applied to the motor. The sensor 304 is an example of a detector that detects a physical quantity corresponding to the force generated by the actuator 303. The sensor 304 may detect a physical quantity (a current value) corresponding to the load (operation force, thrust) of the actuator 303 for each displaced position of the lever 16. The sensor 304 is an example of a detector.

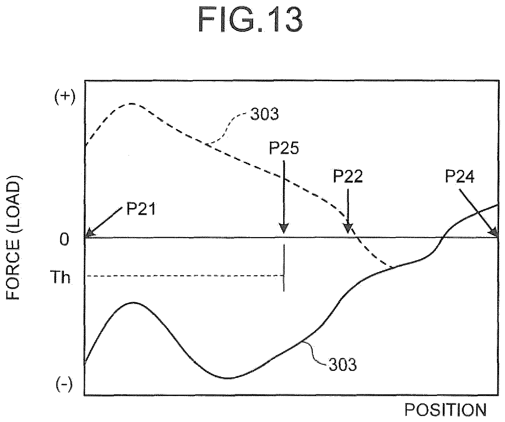

The ECU 301 can control the variable setter 20 to make adjustments (initial setting) at the time of factory shipment (before the start of use), following the procedure illustrated in FIG. 12. The procedure of FIG. 12 is performed while no rotation is input to the clutch device 100. Further, the position of the release plate 15 may be specified by a predetermined position of the movable part of the actuator 303, for example, the distance from an initial position. First, the ECU 301 acquires results of the detection from the sensor 304 while moving the release plate 15 from the position P21 toward the position P22, that is, when the release plate 15 is located at multiple positions including a specific position, a set position, and a detection position between the position P21 and the position P25 (within a predetermined range, see FIG. 13) (S10). In S10, the position P25 is set between the position P21 and the position P22. The position P25 defines the range of results of the detection by the sensor 304. The positions are appropriately set to include the maximum load position in the range. The position P25 (a predetermined range) may be set depending on the moving distance from the position P21. The position P25 may be changeable. Further, the positions between the position P21 and the position P25 may be set at equal intervals or may be more closely set in the vicinity of a maximum-value estimated position. Next, the ECU 301 compares the maximum value among the results obtained in S10 with a threshold value Th (see FIG. 13) (S11). When the maximum value is the same as or exceeds the threshold value Th (Yes in S12), the ECU 301 controls the actuator 303 (S13) to move the release plate 15 to the position P24 and then the position P23, and proceeds to S10. By S13, the wedge rings 21 and 22 of the variable setter 20 are moved away from each other in the axial direction to move the meshing positions of the sawteeth 25a and the meshing part 26 in the circumferential direction and make the wedge rings 21 and 22 abut on each other in the axial direction again and slide in the circumferential direction. Thereby, the axial distance between the wedge rings 21 and 22 is increased. Because of this, as the changes from the broken line to the solid line in FIG. 10, the force of the elastic member 19 to the position of the release plate 15 (the pressure plate 14 and the lever 16) increases. As the force of the elastic member 19 increases, the load of the actuator 303 decreases. S13 and S10 are repeated until the maximum value becomes less than the threshold value Th (until No is obtained in S12). That is, in the case of No in S12, the procedure of FIG. 12 is terminated. FIG. 13 illustrates an example of a relation between the position of the release plate 15 at the time of factory shipment and the operation force (thrust, load) of the actuator 303. The horizontal axis of FIG. 13 is equivalent to the horizontal axis of FIG. 5. The vertical axis of FIG. 13 indicates a physical quantity corresponding to the operation force of the actuator 303 detected by the sensor 304, for example, a current value. By the procedure of FIG. 12, the operation force of the actuator 303 can be adjusted to a predetermined value or less, as represented by the change from the broken line to the solid line in FIG. 13.

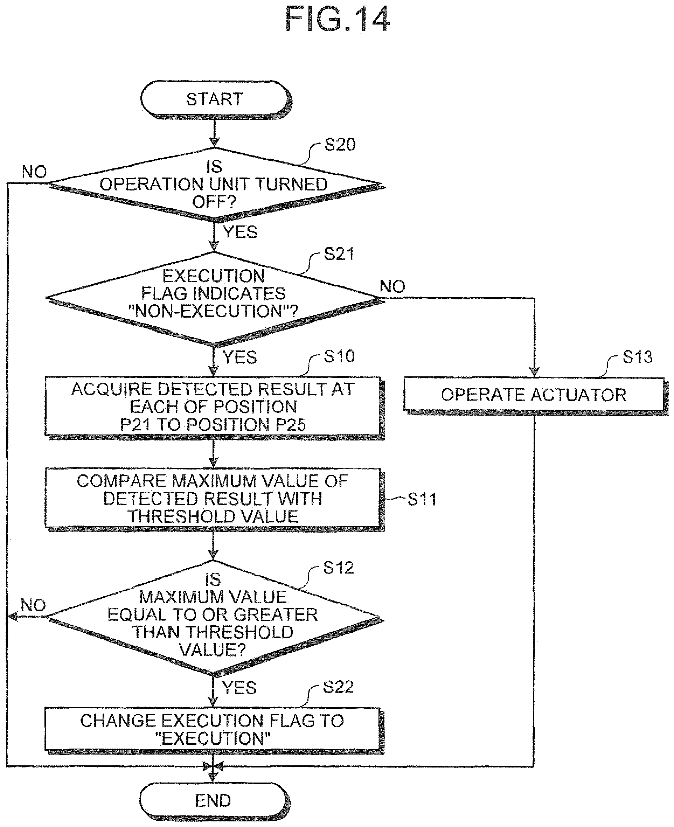

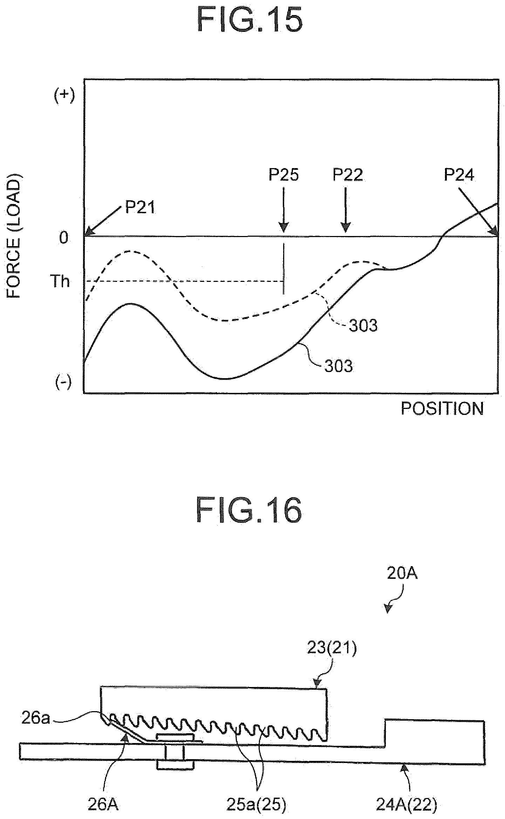

The ECU 301 can control the variable setter 20 to make adjustments (adjustment over time) after the start of use of the clutch device 100 (after factory shipment), following the procedure illustrated in FIG. 14. Hereinafter, the same or like procedures are denoted by the same or like reference numerals, and redundant descriptions thereof will not be provided. The procedure of FIG. 14 includes the steps similar to those of FIG. 12. However, in FIG. 14, S10 to S12 are executed when the operation unit 302 is in OFF state (Yes in S20), and an execution flag (data) stored in a nonvolatile storage of the ECU 301 is a value indicating non-execution (for example, "0") (Yes in S21). When the maximum value is the same as or exceeds the threshold value (Yes in S12), for example, the ECU 301 changes the execution flag (data) stored in the nonvolatile storage of the ECU 301 from the value indicating non-execution (for example, "0") to a value indicating execution (for example, "1") (S22). Upon completion of S22, the ECU 31 temporarily terminates the series of procedure. However, since the changed execution flag with the value indicating execution is stored in S22, at the next timing when the operation unit is turned OFF (Yes in S20), a negative result "No" is obtained in S21, and S13 is executed. By S13, the axial distance between the wedge rings 21 and 22 of the variable setter 20 is increased. As represented by the change from the broken line to the solid line in FIG. 10, the force of the elastic member 19 to the positions of the release plate 15, the pressure plate 14 and the lever 16 thus increases. Upon completion of S13 and in the case of No in S20, the procedure of FIG. 14 is terminated. The continuous operations of the actuator 303 for the detection (S11) and for the control (S13) tend to increase the energy consumption (electric energy) of the actuator 303. In this regard, in the present embodiment, the actuator 303 can reduce the energy consumption by separately performing the detection and the control. FIG. 15 illustrates an example of a relation between the position of the release plate 15 after the start of use of the clutch device 100 and the operation force (the load) of the actuator 303. Representation in FIG. 15 corresponds to that in FIG. 13. By the procedure of FIG. 14, the operation force of the actuator 303 can be adjusted to a predetermined value or less, as represented by the change from the broken line to the solid line in FIG. 15.

As described above, the clutch device 100 of the present embodiment includes the variable setter 20 capable of changing (adjusting) the axial length, for example, between the elastic member 17 (the first elastic member) and the elastic member 19 (the second elastic member). According to the present embodiment, for example, by adjusting the axial length of the variable setter 20, it is possible to adjust the amounts of elastic deformation of the elastic members (for example, the elastic members 17 and 19) depending on the positions of the pressure plate 14, the release plate 15 and the lever 16. Accordingly, desired characteristics can be obtained. With a large difference from the desired characteristics due to manufacturing error, accumulated variation, and the aged degradation of the elastic members 17, 18 and 19 or the friction materials 13d, the clutch device 100 can attain the characteristics closer to the desired characteristics by changing the axial length of the variable setter 20. The above embodiment has exemplified the structure in which the axial length of the variable setter 20 is changed to increase, however, the axial length can be changed to decrease depending on the position at which the variable setter 20 is provided.

Further, in the present embodiment, for example, by changing (adjusting) the axial length of the variable setter 20, the axial distance D between the outer plate 13a and the counter plate 13f (two parts), which support both axial ends of the elastic member 19 relative to the axial position of the release plate 15 (the third member), is changed (adjusted). According to the present embodiment, for example, the force generated by the elastic member 19 is thus changed (adjusted) in accordance with the position of the release plate 15. This changes, for example, the magnitude of the operation force (for example, the operation force of the actuator 303) required for switching the rotation transmitting unit 10 from the transmission state to the cut-off state.

Further, in the present embodiment, for example, the ECU 301 (the control unit) controls the variable setter 20 on the basis of the comparison between the physical quantity corresponding to the force generated by the actuator 303 with the threshold value, while the release plate 15 is located between the position P21 and the position P25 (within a predetermined range). Thus, for example, the operation force (load) of the actuator 303 can be more accurately reduced.

Further, in the present embodiment, for example, the sensor 304 (the detector) detects the physical quantity while no rotation is input to the clutch device 100. Thus, for example, the sensor 304 can more precisely detect detected values, less affected by disturbance such as centrifugal force or vibration.

Further, in the present embodiment, for example, the sensor 304 detects the physical quantity while the release plate 15 is located at multiple positions (specific positions) between the position P21 and the position P25. Thus, it can more quickly obtain detected values, for example.

Further, in the present embodiment, for example, the ECU 301 controls the variable setter 20 based on the comparison between the maximum value of the physical quantity detected by the sensor 304 and the threshold value. This can reliably reduce the maximum value of the operation force of the actuator 303, for example.

Further, in the present embodiment, the variable setter 20, for example, includes the serration 25 having the sawteeth 25a circumferentially aligned on the base 21, and a meshing part 26 which can axially move away from the sawteeth 25a and is guided and supported by the base 22 to move to one circumferential side when separated from the sawteeth 25a. According to the present embodiment, for example, the wedge rings 21 and 22 are moved away from each other in the axial direction and abut on each other again to slide in the circumferential direction, thereby changing the axial distance between the wedge rings 21 and 22. According to the present embodiment, for example, it is possible to change the distance between the pressure plate 14 and the elastic member 17 by a relatively simple operation.

Further, in the present embodiment, for example, the meshing part 26 is moved away from the sawteeth 25a while the release plate 15 is located outside (at the position P24) the movable range in use (positions P21 to P23). For example, the adjustment may be thus performed without affecting the normal operation of the clutch device 100.

Further, in the present embodiment, for example, the wedge rings 21 and 22 are moved away from each other in the axial direction by the actuator 303. Thus, according to the present embodiment, the structure can be more simplified, for example, than the structure separately including a mechanism for moving the clutch disk 13 and the pressure plate 14 away from each other in the axial direction (a mechanism for changing the transmission state of the rotation transmitting unit 10) and a mechanism for moving the wedge rings 21 and 22 away from each other in the axial direction. Thus, for example, the structure can be more reduced in size and weight.

### First Modification

A variable setter 20A of the present modification is different from the variable setter 20 of the first embodiment. The variable setter 20A may be provided in place of the variable setter 20.

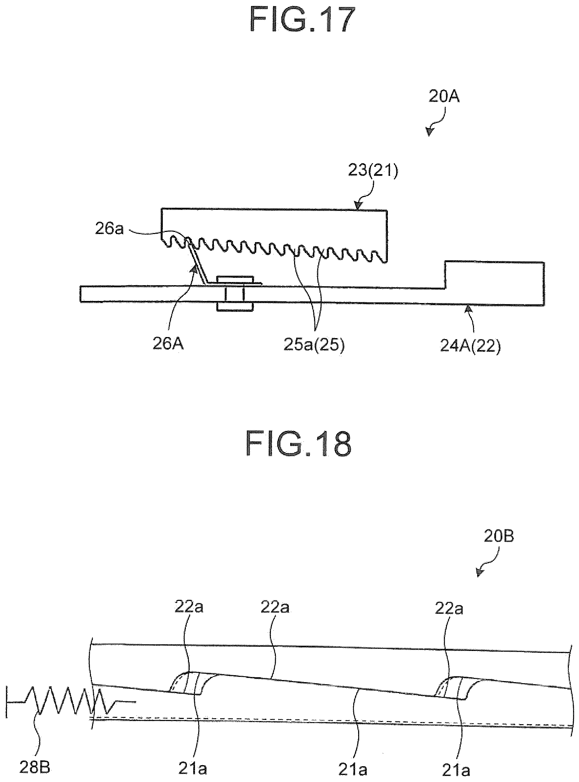

The variable setter 20A illustrated in FIGS. 16 and 17 has wedge rings 21 and 22, an adjuster 23, and a serration 25 as the variable setter 20. However, the variable setter 20A differs in including an adjuster 24A and a meshing part 26A from the one in the first embodiment. The adjuster 24A includes a leaf spring-like meshing part 26A. The meshing part 26A is elastically bent at one end of the adjuster 24A closer to the adjuster or the serration 25. While receiving no external force, the meshing part 26A protrudes to the adjuster 23 by its own elastic force. When the wedge rings 21 and 22 are close to each other, the meshing part 26A is elastically bent toward the adjuster 24A. A tip 26a of the meshing part 26A meshes with the sawteeth 25a by the elastic repulsion force or elastic force. When the wedge rings 21 and 22 are separated from each other in the axial direction by the operation of the actuator 303, the meshing part 26A is disengaged from the sawteeth 25a in the axial direction. While separated from the sawteeth 25a, the meshing part 26A is bent by the elastic force to further protrude, and the tip 26a of the meshing part 26A circumferentially shifts from the meshing sawteeth 25a and comes at the sawteeth 25a on the axial side. That is, in this modification, the meshing part 26A when separated from the sawteeth 25a is supported by the adjuster 24A (the base 22, a fifth member) to move to one circumferential side. Thus, when the wedge rings 21 and 22 become close to each other in the axial direction again, the meshing part 26A circumferentially shifts from the meshing sawteeth 25a and meshes with other sawteeth 25a. Thus, the wedge rings 21 and 22 slide in the circumferential direction, changing the axial distance between the wedge rings 21 and 22. According to this modification, the variable setter 20A of a novel structure can be obtained. Further, according to this modification, the variable setter 20A may be further simply structured.

### Second Modification

A variable setter 20B of this modification is different from the variable setter 20 of the first embodiment. The variable setter 20B may be provided in place of the variable setter 20.

The variable setter 20B illustrated in FIG. 18 includes wedge rings 21 and 22 as the variable setter 20. However, the variable setter 20B does not include the adjusters 23 and 24. The variable setter 20B is provided with an elastic part 28B which applies a circumferential force (compressive reaction force) to at least one of the base 21 and the base 22. The elastic part 28B is, for example, a coil spring. Along with sliding between the surface 21a of the base 21 and the surface 22a of the base 22 by the elastic force of the elastic 28B, the axial distance between the wedge rings 21 and 22 changes. However, in a normal state the wedge rings 21 and 22 abut on each other and are suppressed from sliding by the friction between the surface 21a and the surface 22a. Because of this, in this embodiment, the release plate 15 is moved toward the position P24 by an actuator 303 to apply a force to the base 21 and the base 22 to move away from each other in the axial direction. This reduces the frictional force between the base 21 and the base 22, that is, weakens the force axially acting between the base 21 and the base 22, circumferentially slides the base 21 and the base 22, and changes the axial distance. According to this modification, for example, the variable setter 20B can be more simply structured. The axial length (amount of adjustment) of the variable setter 20B can be adjusted by the amount of movement (stroke) of the actuator 303. Thus, according to this modification, the axial length of the variable setter 20B can be more simply or precisely changed.

### Second Embodiment

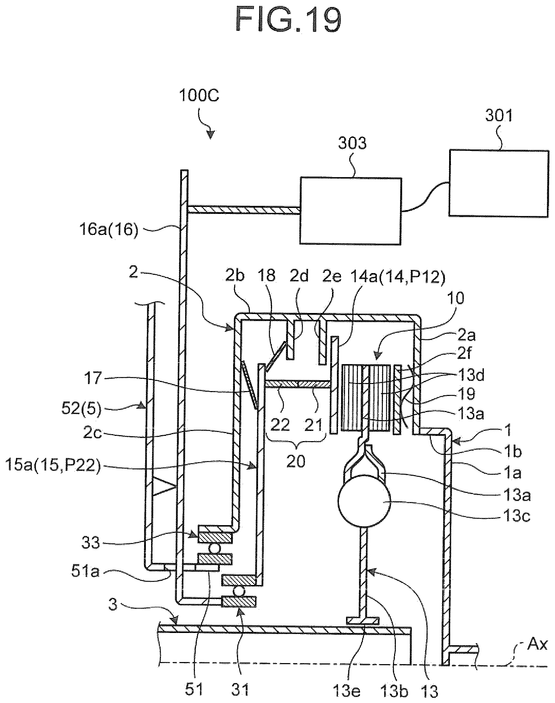

A clutch device 100C of the present embodiment differs from the first embodiment in the arrangement of the elastic member 19. In the present embodiment, as illustrated in FIG. 19, a counter plate 2f is provided at an axial gap from the first end wall 2a. The counter plate 2f has an annular, plate-like shape, and extends, intersecting with the rotational center Ax. The elastic member 19 is provided between the first end wall 2a and the counter plate 2f. The clutch disk 13 does not include the counter plate 13f and the elastic member 19, and the two friction materials 13d are coupled (fixed) to both axial sides of the outer plate 13a, respectively. In this embodiment, a member 2 (the first end wall 2a) is an example of a first member, a clutch disk 13 (the outer plate 13a) is an example of a second member, an elastic member 17 is an example of a first elastic member, and an elastic member 19 is an example of a second elastic member. With such a structure, the same effects as those in the first embodiment can also be obtained.

### Third Embodiment

A clutch device 100D of the present embodiment is a so-called twin clutch including two rotation transmitting units 10 and 10D. The rotation transmitting unit 10 can change the torque transmitted among the drive plate 1, the clutch cover 2 and the shaft 3, and has a similar structure to that of the rotation transmitting unit 10 of the first embodiment. The rotation transmitting unit 10D can change the torque transmitted among the drive plate 1, the clutch cover 2 and another shaft 3D. In the present embodiment, the rotation transmitting units 10 and 10D cannot transmit the rotation at the same time, and only one of the rotation transmitting units 10 and 10D can transmit the rotation. The shaft 3D is rotatably provided about the same rotational center Ax as the shaft 3, and overlaps the shaft 3 in the radial direction. In this embodiment, the shaft 3 has a cylindrical shape, and the shaft 3D is provided inside the shaft 3, that is, radially inside. In the present embodiment, components with reference numerals ending D have same or like structures and functions as the components with the same reference numerals without ending D in the first embodiment. That is, a clutch disk 13D is similar to the clutch disk 13, a pressure plate 14D is similar to the pressure plate 14, a release plate 15D is similar to the release plate 15, and a lever 16D is similar to the lever 16. Further, an elastic member 17D is similar to the elastic member 17, an elastic member 18D is similar to the elastic member 18, and an elastic member 19D is similar to the elastic member 19. Further, a flange 2g is similar to the flange 2d, and a flange 2h is similar to the flange 2e.

The pressure plate 14D is provided to be movable in the axial direction as the pressure plate 14. Further, the pressure plate 14D is configured so as to rotate integrally with the clutch cover 2. The pressure plate 14D has walls 14Da, 14Db and 14Dc. The wall 14Da has an annular, plate-like shape, and extends, intersecting with the rotational center Ax. The wall 14Db has a cylindrical shape around the rotational center Ax. The wall 14Db covers the radial outer side of the side wall 2b with a gap. The wall 14Dc has an annular, plate-like shape and extends, intersecting with the rotational center Ax. A radial outer end of the wall 14Da is connected to one axial end of the wall 14Db. The radial outer end of the wall 14Dc is connected to the other axial end of the wall 14Db. The pressure plate 14D generally has the function similar to the pressure plate 14. One axial side wall 14Da of the pressure plate 14D can contact with the friction material 13d of the clutch disk 13D. The other axial side wall 14Dc of the pressure plate 14D is supported by the release plate 15D (a wall 15Da) via a variable setter 20D. Along with the axial movement of the lever 16D, the release plate 15D is moved in the axial direction to axially move the wall 14Dc via the variable setter 20D, and the wall 14Db and the wall 14Da.

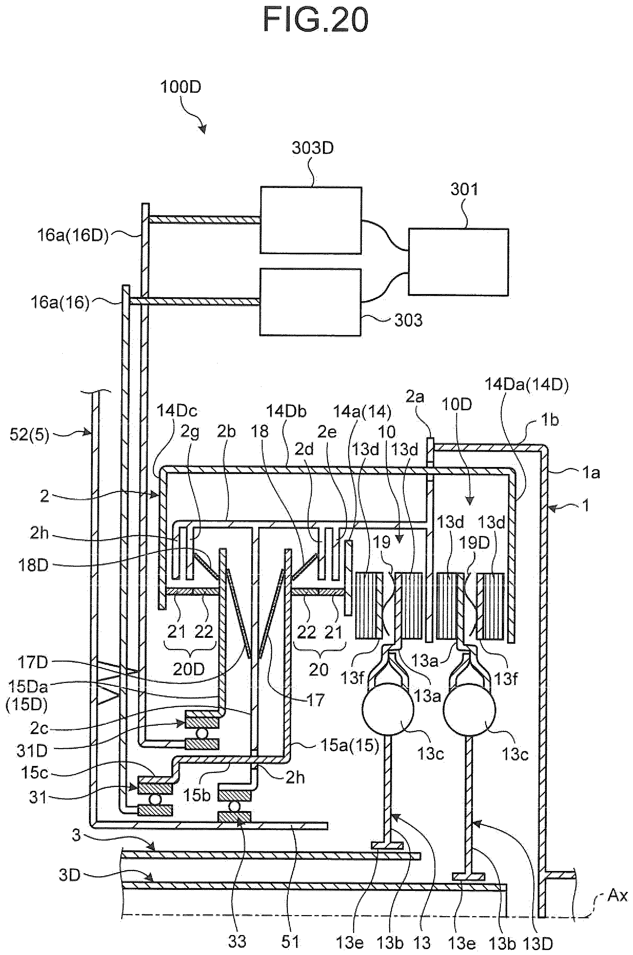

In such a configuration, by moving the movable parts, that is, the release plate 15D, the lever 16D, and a bearing 31D in the axial direction by an actuator 303D controlled by an ECU 301, the clutch device 100D can switch a transmission state in which the rotation transmitting unit 10D transmits the rotation (torque), and a cut-off state in which the rotation transmitting unit 10D is interrupted from transmitting the rotation. However, the rotation transmitting unit 10 transitions from the cut-off state to the transmission state by the movement of the pressure plate 14 toward one axial side(rightward in FIG. 20). Meanwhile, the rotation transmitting unit 10D transitions from the cut-off state to the transmission state by the movement of the pressure plate 14D toward the other axial side(leftward in FIG. 20).

The variable setter 20 for the rotation transmitting unit 10 is provided between the release plate 15 (the wall 15a) and the pressure plate 14 (the wall 14a), and the variable setter 20D for the rotation transmitting unit 10D is provided between the release plate 15D (the wall 15Da) and the pressure plate 14D (the wall 14Dc). The variable setters 20 and 20D may be configured and variably set similarly to the variable setters 20, 20A and 20B described in the above embodiments and modifications. The so-called double clutch according to this embodiment can also attain similar results (effects) by the variable setters 20 and 20D to those in the above embodiments and modifications.

Further, the clutch device of the present invention may include: a first member rotatably provided around a rotational center; a second member rotatably provided around the rotational center and movable in the axial direction of the rotational center, at least between a first position and a second position, the first position in which a torque is transmitted by friction between the second member and the first member, the second position in which the second member is more spaced apart from the first member than the first position and to which no torque is transmitted; a first elastic member which generates a pressing force to one of the first member and the second member toward the other, the force varying in accordance with the axial position of the second member; a second elastic member which generates a pressing force to the one toward an opposite side of the other, the force varying in accordance with the axial position of the second member; a third member movably provided in the axial direction to vary the axial position of the second member; and a variable setter located between the second member and the third member to be able to vary the axial length.

Further, in the clutch device of the present invention, the variable setter may have a fourth member which is interposed between the one and the first elastic member; a fifth member which is interposed between one or the first elastic member and the fourth member to be movable from the fourth member in the axial direction, and is configured to move to one axial side with respect to the fourth member by moving to one circumferential side of the rotational center with respect to the fourth member; a serration provided in the fourth member and including sawteeth aligned substantially in the circumferential direction; and a meshing part which meshes with the sawteeth and is movable away from the sawteeth in the axial direction and is supported by the fifth member to move to the one circumferential side when separated from the sawteeth.

While the embodiments and the modifications of the present invention have been described, the above embodiments and modifications are merely an example, and are not intended to limit the scope of the invention. The above embodiments and modifications can be provided in other various forms, and various omissions, substitutions, combinations and changes can be made within a scope that does not depart from the scope of the invention. Further, specifications of each configuration and shape (structure, kind, direction, shape, size, length, width, thickness, height, number, arrangement, position, material) can be provided by being appropriately changed. For example, the arrangements and configurations of each part of the clutch device should not be limited to the above embodiments and modification. Further, the clutch device may be provided at various positions of various devices. Further, the two members coupled in the above embodiments may be supported with each other and may be fixed.

### EXPLANATIONS OF LETTERS OR NUMERALS

- 13, 13D: CLUTCH DISK (FIRST MEMBER)

- 13a: OUTER PLATE (WALL, TWO PARTS)
- 13f: COUNTER PLATE (WALL, TWO PARTS)
- 14, 14D: PRESSURE PLATE (SECOND MEMBER)
- 15, 15D: RELEASE PLATE (THIRD MEMBER)
- 17, 17D: ELASTIC MEMBER (FIRST ELASTIC MEMBER)
- 19, 19D: ELASTIC MEMBER (SECOND ELASTIC MEMBER)
- 20, 20A, 20B, 20D: VARIABLE SETTER
- 21: WEDGE RING (FOURTH MEMBER)
- 22: WEDGE RING (FIFTH MEMBER)
- 21a,: 22a SURFACE (ABUTMENT)
- 25a: SERRATION
- 25: SERRATION
- 26, 26A: MESHING PART
- 28B: ELASTIC PART (THIRD ELASTIC MEMBER)
- 100, 100C, 100D: CLUTCH DEVICE
- 301: ECU (CONTROL UNIT)
- 303, 303D: ACTUATOR
- 304: SENSOR (DETECTOR)
- Ax: ROTATIONAL CENTER
- D: DISTANCE
- P11: FIRST POSITION
- P12: SECOND POSITION

## Claims

1. A clutch device comprising:
a first member rotatably provided around a rotational center;
a second member provided to be rotatable around the rotational center and movable in an axial direction of the rotational center between a first position and a second position, the first position in which a torque is transmitted by friction between the second member and the first member, the second position to which no torque is transmitted from the first position;
a third member movably provided in the axial direction to change an axial position of the second member;
a first elastic member that urges the second member toward the first position via the third member;
a second elastic member that urges the second member toward the second position; and
a variable setter located between the second member and the third member and capable of changing a length of the variable setter in the axial direction.

2. The clutch device according to claim 1, wherein a magnitude of a force of the second elastic member changes in accordance with a change in the axial length of the variable setter, the force generated by the second elastic member corresponding to the axial position of the third member.

3. The clutch device according to claim 1 or 2, further comprising:
an actuator that generates a force to move the third member in the axial direction;
a detector that detects a physical quantity corresponding to the force generated by the actuator; and
a control unit that controls the variable setter on the basis of a comparison between a physical quantity and a threshold value, the physical quantity detected by the detector while the third member is located within a predetermined range.

4. The clutch device according to claim 3, wherein the detector detects the physical quantity while no rotation is input to the clutch device.

5. The clutch device according to claim 3 or 4, wherein the detector detects the physical quantity while the third member is at a specific position within the predetermined range.

6. The clutch device according to any one of claims 3 to 5, wherein the control unit controls the variable setter on the basis of a comparison between a maximum value of the physical quantity detected by the detector and the threshold value.

7. The clutch device according to any one of claims 1 to 6, wherein
the variable setter includes
a fourth member including sawteeth in a circumferential direction, and
a fifth member including a meshing part with a meshing surface to mesh with the sawteeth while inclined, the sawteeth and the mesh part meshing with each other depending on an axial position of the third member, the fifth member being capable of variably setting the axial position of the second member by moving the meshing part away from the fourth member in the axial direction to release the meshing with the sawteeth and by moving the meshing part relative to the fourth member in the circumferential direction to mesh with the sawteeth at a different position.

8. The clutch device according to claim 7, wherein
the meshing part is moved away from the sawteeth while the third member is located outside a movable range in use.

9. The clutch device according to any one of claims 1 to 6, wherein the variable setter includes
a fourth member interposed between the one and the first elastic member, and having a surface extending toward one axial side as extending toward one circumferential side of the rotational center,
a fifth member interposed between the one or the first elastic member and the fourth member to be movable away from the fourth member in the axial direction, having an abutment which slides with the surface, the fifth member configured to move to one axial side with respect to the fourth member while moving to one circumferential side of the rotational center with respect to the fourth member, and
a third elastic member that generates a force by which the fourth member and the fifth member relatively move in the circumferential direction,
wherein, while the fourth member and the fifth member are in contact with each other, the fourth member and the fifth member are suppressed from sliding in the circumferential direction by a frictional force between the surface and the abutment.

10. The clutch device according to any one of claims 7 to 9, further comprising:
an actuator that generates a force to move the one in the axial direction,
wherein the fourth member and the fifth member are configured to be moved away from each other in the axial direction by the actuator.

11. A clutch device comprising two rotation transmitting units, one of the two rotation transmitting units being capable of selectively transmitting rotation, the clutch device comprising:
for each of the rotation transmitting units,
a first member rotatably provided around a rotational center;
a second member provided to be rotatable around the rotational center and movable in the axial direction of the rotational center at least between a first position and a second position, the first position in which a torque is transmitted by friction between the second member and the first member, the second position in which the second member is more spaced apart from the first member than the first position and to which no torque is transmitted;
a first elastic member that generates a pressing force to one of the first member and the second member toward the other, the force changing in accordance with the axial position of the second member;
a second elastic member that generates a pressing force to the one toward an opposite side of the other, the force changing in accordance with the axial position of the second member;
a third member movably provided in the axial direction to change the axial position of the second member; and
a variable setter located between the second member and the third member and capable of changing the axial length.
